# EUROPÄISCHE PATENTANMELDUNG

(11) **EP 4 167 568 A1**
(43) Veröffentlichungstag der Anmeldung: **19.04.2023**
(21) Anmeldenummer: 22201727.9
(22) Anmeldetag: 14.10.2022
(51) Int. Cl.: H04N 7/15, H04N 5/268

(54) **GERICHTSSAAL-MEDIENSYSTEM**

(30) Priorität: 14.10.2021 DE 102021126611
(71) Anmelder: COCOSOFT Systems GmbH, 13581 Berlin (DE)
(72) Erfinder: HESTERBERG, Jan Christian, 13503 Berlin (DE)
(74) Vertreter: Dantz, Dirk

(57) **Zusammenfassung**

Die Erfindung betrifft ein Verfahren zur Steuerung eines Gerichtssaal-Mediensystems mit den Verfahrensschritten Bereitstellen eines ersten Schaltzustandes mit einer Schaltung, die die Eingabe von Steuerbefehlen für die Steuerung einer ersten Medienquelle über eine Eingabevorrichtung ermöglicht, Bereitstellen eines zweiten Schaltzustandes mit einer Schaltung, die die Eingabe von Steuerbefehlen für die Steuerung der ersten Medienquelle über eine Eingabevorrichtung nicht ermöglicht, wobei zwischen dem ersten und dem zweiten Schaltzustand geschaltet wird, wenn die auf einer ersten Ausgabeeinrichtung ausgegebenen Medieninhalte verändert werden.

## Beschreibung

Die Erfindung betrifft ein Verfahren zur Steuerung eines Gerichtssaal-Mediensystems mit den Verfahrensschritten Bereitstellen eines ersten Schaltzustandes mit einer Schaltung, die die Eingabe von Steuerbefehlen für die Steuerung einer ersten Medienquelle über eine Eingabevorrichtung ermöglicht, Bereitstellen eines zweiten Schaltzustandes mit einer Schaltung, die die Eingabe von Steuerbefehlen für die Steuerung der ersten Medienquelle über eine Eingabevorrichtung nicht ermöglicht, sowie ein Gerichtssaalmediensystem zur Durchführung des Verfahrens.

### Stand der Technik

Der Einsatz eines Mediasystems in der Justiz, insbesondere in einem Gerichtssaal, bietet Vorteile in Hinblick auf Vereinfachung der Kommunikation zwischen den Justizbehörden. So kann z.B. die Meinung von Sachverständigen eingeholt werden, die entfernt vom Sitzungsort wohnen. Auch spezialisierte Dolmetscher können einbezogen werden, vor allem bei Verfahren an Gerichten in ländlichen Räumen.

Neben der Möglichkeit, Videokonferenzen mit dieser Lösung durchzuführen, ist es ebenso möglich, auch im Zuge der Einführung der elektronischen Aktenführung unsere Lösung einzubinden. Somit können zwei Digitalisierungsschwerpunkte im Bereich der Justiz mit einer Lösung umgesetzt werden.

Die Schrift CN 10 184 72 20 A offenbart eine digitale Gerichtsverhandlungssteuerungsvorrichtung, die die folgenden Module umfasst: eine zentrale Verarbeitungseinheit, ein Matrixschaltmodul, ein Netzwerkschnittstellenmodul, einen Video-/Audiocodierer, einen Video-/Audiodecodierer, ein Videoausgabesteuermodul, ein Audioausgabesteuermodul und eine Ausgabesteuerschnittstelle. Die zentrale Verarbeitungseinheit beendet die Gerichtsverhandlung wie die Vor-Ort-Anzeige, das Abspielen, die Beweisanzeige und ähnliches, indem sie das Matrixschaltmodul, das Netzwerkschnittstellenmodul, das Videoausgangssteuermodul, das Audioausgangssteuermodul und die Ausgangssteuerschnittstelle steuert.

Die Patentschrift CN 10 184 0532 A offenbart ein digitales Gerichtsprozess-Informationsverarbeitungssystem, das die folgenden Vorrichtungen umfasst: eine digitale Gerichtsprozess-Steuerungsvorrichtung, einen Informationsmanagement-Server, eine Speichervorrichtung, eine Video-Audio-Matrix, eine Kamera, ein Mikrofon, ein Audioplayer, eine Videoanzeigevorrichtung und eine zentrale Steuereinheit, wobei die digitale Gerichtsprozess-Steuerungsvorrichtung eine Steueranweisung des Informationsmanagement-Servers empfängt, um die Speichervorrichtung, die Video-Audio-Matrix, den Audioplayer, die Videoanzeigevorrichtung und die zentrale Steuereinheit zu steuern, alle gerichtlichen Prozesse eines Gerichts zu vervollständigen und alle Materialien eines Falls zu verarbeiten, zu bearbeiten, zu archivieren und zu speichern.

Es ist daher eine Aufgabe der Erfindung, ein Verfahren zur Steuerung eines Gerichtssaal-Mediensystems bereitzustellen, mit dem das Mediasystem komfortabel und flexibel an unterschiedliche Konfigurationen der Gerichtssaal-Mediensystemsteuerung anpassbar ist. Es ist ebenfalls Aufgabe der Erfindung, eine Gerichtssaal-Mediensystemsteuerung bereitzustellen, die komfortabel bedienbar, flexibel sowie vertrauenswürdig ist.

Die Aufgabe wird mittels des Verfahrens zur Steuerung eines Gerichtssaal-Mediensystems gelöst. Vorteilhafte Ausführungen der Erfindung sind in den Unteransprüchen dargelegt.

Das erfindungsgemäße Verfahren zur Steuerung eines Gerichtssaal-Mediensystems weist zwei Verfahrensschritte auf: Im ersten Verfahrensschritt wird ein erster Schaltzustand mit einer Schaltung bereitgestellt, der die Eingabe von Steuerbefehlen für die Steuerung der ersten Medienquelle über eine Eingabevorrichtung ermöglicht. Im zweiten Verfahrensschritt wird ein zweiter Schaltzustand mit einer Schaltung bereitgestellt, der die Eingabe von Steuerbefehlen für die Steuerung der ersten Medienquelle über eine Eingabevorrichtung nicht ermöglicht. Erfindungsgemäß wird zwischen dem ersten und dem zweiten Schaltzustand geschaltet, wenn die auf einer ersten Ausgabeeinrichtung ausgegebenen Medieninhalte verändert werden. Das erfindungsgemäße Verfahren ermöglicht die Steuerung des Gerichtssaal-Mediensystems derart, dass eine Steuerung der ersten Medienquelle blockiert wird, wenn die auf einer ersten Ausgabeeinrichtung ausgegebenen Medieninhalte verändert werden. Die Schaltung zwischen den Schaltzuständen kann manuell oder automatisch, z.B. mittels einer geeigneten Software, erfolgen. Es ist daher möglich, dass z.B. ein Gutachter eine Medienquelle zur Verfügung stellt und diese mittels einer Eingabevorrichtung steuern kann, gleichzeitig ist eine Steuerung dieser Medienquelle durch andere Eingabevorrichtungen nicht möglich.

Gerichtssaal-Mediensysteme unterliegen hierbei besonderen Anforderungen. Zum einem muss gewährleistet sein, dass Gerichtssaal-Mediensysteme nicht von außen durch Dritte korrumpiert werden können. Hierfür ist es in einer optionalen Ausgestaltung der Erfindung vorgesehen, dass das Gerichtssaal-Mediensystem als geschlossenes System betrieben wird. In einer besonders bevorzugten Ausführungsform wird das Gerichtssaal-Mediensystem während eines Gerichtsverfahrens als geschlossenes System betrieben. Zum anderen muss das Gerichtssaal-Mediensystem darauf ausgelegt ein, dass den Verfahrensbeteiligten ihr beispielsweise im deutschen Grundgesetz verankertes Recht auf rechtliches Gehör gewährleistet werden kann - allerdings nur insoweit, wie dies der Vorsitzende Richter zulässt, damit beispielsweise die Gerichtsverhandlung selbst nicht als Podium missbraucht werden kann. Andernfalls könnte dem Gericht selbst Verfahrensfehler angelastet werden, oder nicht genehmigte Inhalte eingebracht und dargestellt werden.

In einer Weiterbildung der Erfindung wird zwischen dem ersten und dem zweiten Schaltzustand geschaltet, wenn die für die Ausgabe von Medieninhalten auf der ersten Ausgabeeinrichtung ausgewählte Medienquelle geändert wird. Die Steuerung einer Medienquelle wird ermöglicht bzw. blockiert bei Änderung der Medienquelle. Daher kann ein Prozessbeteiligter eine Medienquelle bereitstellen und diese steuern, diese Medienquelle kann jedoch über Eingabevorrichtungen weiterer Prozessbeteiligter nicht gesteuert werden.

In einer weiteren Gestaltung der Erfindung werden bei dem ersten Schaltzustand die Medieninhalte der von einer ersten Medienquelle zur Ausgabe bereitgestellten Medieninhalte auf der ersten Ausgabeeinrichtung ausgegeben. Die von der ersten Medienquelle bereitgestellten Medieninhalte umfassen insbesondere Bild- und/oder Toninhalte. Die Ausgabe-Einrichtungen sind vorzugsweise berührungssensitive Bildschirme, die zur Präsentation medialer Bild- und Toninhalte vorgesehen sind. Die Größe und Anzahl dieser Bildschirme ist abhängig von der Größe des Sitzungssaales. Der oder die Bildschirme sind an einer leicht zugänglichen, für alle Sitzungsteilnehmer einsehbaren Stelle im Sitzungssaal angebracht.

In einer Weiterbildung der Erfindung werden bei dem zweiten Schaltzustand die Medieninhalte der von einer ersten Medienquelle verschiedenen Medienquelle zur Ausgabe bereitgestellten Medieninhalte auf der ersten Ausgabeeinrichtung ausgegeben. Die erste Medienquelle steht z.B. der Richterbank, insbesondere dem Vorsitzenden Richter, zur Verfügung. Die Auswahl einer von einer ersten Medienquelle verschiedenen Medienquelle zur Ausgabe von Medieninhalten werden auf einer ersten Ausgabeeinrichtung ausgegeben, während die von der ersten Medienquelle bereitgestellten Medieninhalte nicht ausgegeben werden. Daher kann z.B. ein Gutachter eine Medienquelle zur Verfügung stellen und diese mittels einer Eingabevorrichtung steuern. Die Medieninhalte dieser Medienquelle werden ausgegeben, die von der ersten Medienquelle bereitgestellten Medieninhalte nicht.

In einer weiteren Ausführung der Erfindung werden die von einer ersten Medienquelle ausgegeben Bild- und/oder Toninhalte auf einer Mehrzahl von Ausgabeeinrichtungen ausgegeben. Die Ausgabeeinrichtungen weisen Komponenten zur Ausgabe von Bild- und/oder Toninhalten auf oder sind mit solchen verbunden. Die Ausgabeeinrichtungen können räumlich getrennt sowohl voneinander als auch von der ersten Medienquelle angeordnet sein.

In einer weiteren Ausgestaltung der Erfindung ist die erste Medienquelle über mehrere Eingabeeinrichtungen bedienbar. Die Eingabevorrichtung, mittels der die erste Medienquelle gesteuert werden kann, ist üblicherweise ein Bildschirm mit Touch-Funktion. Die Medienquelle kann aber auch über eine Mehrzahl von Eingabevorrichtungen gesteuert werden, z.B. über Maus und Tastatur bzw. eine Spracheingabe.

In einer weiteren Ausbildung der Erfindung werden die auf der ersten Ausgabeeinrichtung zur Ausgabe gebrachten veränderten Medieninhalte aus einer von der ersten Medienquelle verschiedenen Medienquelle zur Ausgabe auf der ersten Ausgabeeinrichtung gebracht. Die von einer ersten Medienquelle verschiedenen Medienquelle bereitgestellten Bild- und/oder Toninhalte werden auf einer ersten Ausgabeeinrichtung ausgegeben. Daher kann z.B. ein Gutachter eine Medienquelle zur Verfügung stellen und diese mittels einer Eingabevorrichtung steuern.

In einer Weiterbildung der Erfindung erfolgt das Verändern der auf der ersten Ausgabeeinrichtung zur Ausgabe gebrachten Medieninhalte durch die Auswahl einer von der ersten Medienquelle verschiedenen Medienquelle für die Ausgabe von Medieninhalten auf der ersten Ausgabeeinrichtung. Die Auswahl der Medienquelle bestimmt den Schaltzustand der Gerichtssaal-Mediensteuerung. Im ersten Schaltzustand werden die von einer ersten Medienquelle bereitgestellten Bild- und/oder Toninhalte auf einer ersten Ausgabeeinrichtung ausgegeben, die erste Medienquelle ist steuerbar. Im zweiten Schaltzustand werden die von der ersten Medienquelle verschiedenen Medienquelle bereitgestellten Bild- und/oder Toninhalte auf einer ersten Ausgabeeinrichtung ausgegeben, die erste Medienquelle ist nicht steuerbar.

In einer weiteren Ausführung der Erfindung erfolgt die Steuerung der Eingabeeinrichtungen über eine separate Umschalteinrichtung. Die separate Umschalteinrichtung ist im einfachsten Fall ein Umschalter, der manuell betätigt wird. Die separate Umschalteinrichtung kann aber auch eine Schaltung aufweisen, die mittels einer geeigneten Software gesteuert wird. Die separate Umschalteinrichtung kann dann einen Prozessor und einen Speicher aufweisen, die eine individuelle Konfiguration der separaten Umschalteinrichtung ermöglichen.

In einer Weiterbildung der Erfindung ist die separate Umschalteinrichtung mit einer Steuereinheit gekoppelt. Die Steuerung weist eine Schaltung auf, die mittels einer geeigneten Software gesteuert wird. Die Steuerung kann einen Prozessor und einen Speicher aufweisen, die eine individuelle Konfiguration der separaten Umschalteinrichtung ermöglichen.

In einer weiteren Ausbildung der Erfindung erfolgt beim Schalten zwischen dem ersten Schaltzustand und dem zweiten Schaltzustand ein Aktivieren oder Deaktivieren einer Eingabeeinrichtung zur Steuerung der ersten Medienquelle. Zur Steuerung der ersten Medienquelle weist die erste Medienquelle eine Eingabeeinrichtung auf, z.B. einen Bildschirm mit Touch-Funktion, Maus und/oder Tastatur und/oder Möglichkeiten zur Sprachbefehlseingabe. Diese Eingabeeinrichtungen werden derart geschaltet, dass im ersten Schaltzustand eine Eingabe zur Steuerung der ersten Medienquelle möglich ist, im zweiten Schaltzustand nicht. Die Eingabeeinrichtung wird also im ersten Schaltzustand aktiviert, im zweiten Schaltzustand deaktiviert.

In einer weiteren Ausgestaltung der Erfindung ist das Schalten abhängig von der ausgewählten Medienquelle. Die Auswahl der Medienquelle bestimmt den Schaltzustand der Gerichtssaal-Mediensteuerung. Im ersten Schaltzustand werden die von einer ersten Medienquelle bereitgestellten Bild- und/oder Toninhalte auf einer ersten Ausgabeeinrichtung ausgegeben, die erste Medienquelle ist steuerbar. Im zweiten Schaltzustand werden die von der ersten Medienquelle verschiedenen Medienquelle bereitgestellten Bild- und/oder Toninhalte auf einer ersten Ausgabeeinrichtung ausgegeben, die erste Medienquelle ist nicht steuerbar.

In einer weiteren Ausführung der Erfindung sind die Medienquellen in zwei Gruppen eingeteilt. Bei einem Wechsel von der ersten Gruppe von Medienquellen zur zweiten Gruppe von Medienquellen erfolgt ein Schalten zwischen Schaltzuständen. Bei einem Wechsel von Medienquellen innerhalb einer Gruppe erfolgt kein Schalten zwischen den Schaltzuständen. Vorteilhafterweise werden die Medienquellen derart in zwei Gruppen eingeteilt, dass die erste Gruppe eine Mehrzahl von ersten Medienquellen aufweist, die zweite Gruppe eine Mehrzahl von den ersten Medienquellen verschiedenen Medienquellen. Möglich ist z.B., dass die ersten Medienquellen der Richterbank zur Verfügung stehen, die von der ersten Medienquelle verschiedenen Medienquellen Zeugen bzw. Gutachtern. Die Auswahl der Gruppe der Medienquelle bestimmt den Schaltzustand der Gerichtssaal-Mediensteuerung. Im ersten Schaltzustand werden die von einer ersten Gruppe von Medienquellen bereitgestellten Bild- und/oder Toninhalte auf einer ersten Ausgabeeinrichtung ausgegeben, die erste Gruppe von Medienquellen ist steuerbar. Im zweiten Schaltzustand werden die von der zweiten Gruppe von Medienquellen bereitgestellten Bild- und/oder Toninhalte auf einer ersten Ausgabeeinrichtung ausgegeben, die erste Gruppe von Medienquellen ist nicht steuerbar.

In einer Weiterbildung der Erfindung wird die erste Medienquelle über mehrere Eingabevorrichtungen gesteuert. Die Eingabevorrichtung, mittels der die erste Medienquelle gesteuert werden kann, ist üblicherweise ein Bildschirm mit Touch-Funktion. Die Medienquelle kann aber auch über eine Mehrzahl von Eingabevorrichtungen gesteuert werden, z.B. über Maus und Tastatur bzw. eine Spracheingabe.

In einer weiteren Ausbildung der Erfindung betrifft das Schalten zwischen den Schaltzuständen nur ausgewählte Eingabevorrichtungen. Die Eingabevorrichtung, mittels der die erste Medienquelle gesteuert werden kann, ist üblicherweise ein Bildschirm mit Touch-Funktion. Die Medienquelle kann aber auch über eine Mehrzahl von Eingabevorrichtungen gesteuert werden, z.B. über Maus und Tastatur bzw. eine Spracheingabe. Das Schalten zwischen den beiden Schaltzuständen kann nur ausgewählte Eingabevorrichtungen betreffen. So kann z.B. die Maus zur Bedienung der Medienquelle aktiviert bleiben, während die Eingabe über die Tastatur blockiert ist.

In einer weiteren Ausgestaltung der Erfindung betrifft das Schalten zwischen den Schaltzuständen nur eine zentrale Eingabevorrichtung. Das Schalten zwischen den beiden Schaltzuständen kann nur die zentrale Eingabevorrichtung betreffen. So kann z.B. die Maus zur Bedienung der Medienquelle aktiviert bleiben, während die Eingabe über die Tastatur blockiert ist. Eine zumindest teilweise Steuerung der ersten Medienquelle ist daher möglich.

Die Aufgabe wird weiterhin mittels der Gerichtssaal-Mediensystemsteuerung gemäß Anspruch 18 gelöst, das dafür vorgesehen und dafür geeignet ist, Inhalte zu empfangen und auf verschiedenen Ausgabeeinrichtungen auszugeben. Vorteilhafte Ausführungen der Erfindung sind ebenfalls in den Unteransprüchen dargelegt.

Die erfindungsgemäße Gerichtssaal-Mediensystemsteuerung, die dafür vorgesehen und dafür geeignet ist, Inhalte zu empfangen und auf verschiedenen Ausgabeeinrichtungen auszugeben, weist eine Matrixschaltung auf. Die Matrixschaltung weist eine Mehrzahl von Quell-Schnittstellen für den separaten Anschluss von Medienquellen auf, an denen eine Mehrzahl von Medienquellen angeschlossen ist und über die Bild- und/oder Toninhalte empfangbar sind. Die Matrixschaltung weist außerdem eine Mehrzahl von Ausgabe-Schnittstellen für den separaten Anschluss von Ausgabeeinrichtungen auf. Über die Ausgabe-Schnittstellen sind die Bild- und/oder Toninhalte ausgebbar.

Mittels der Matrixschaltung werden die von den Medienquellen gelieferten Bild- und/oder Toninhalte derart geschaltet, dass die Bild- und Toninhalte auf allen, einer Mehrzahl oder auch nur auf einer einzelnen Ausgabeeinrichtung ausgegeben werden. Alle Medienquellen und ebenso alle Ausgabeeinrichtungen sind dabei mit der Matrixschaltung verbunden. Die Anbindung der zu steuernden Geräte kann über Ethernet, RS-232, Infrarot, Relais oder generelle I/O Ports erfolgen.

Zur Ausgabe der Bild- und/oder Toninhalte weist die erfindungsgemäße Gerichtssaal-Mediensystemsteuerung eine Mehrzahl von Ausgabe-Einrichtungen auf, die jeweils separat an die Matrixschaltung angeschlossen sind. Die Ausgabe-Einrichtungen sind vorzugsweise berührungssensitive Bildschirme, die zur Präsentation medialer Bild- und Toninhalte vorgesehen sind. Die Größe und Anzahl dieser Bildschirme ist abhängig von der Größe des Sitzungssaales. Der oder die Bildschirme sind an einer leicht zugänglichen, für alle Sitzungsteilnehmer einsehbaren Stelle im Sitzungssaal angebracht.

Die erfindungsgemäße Gerichtssaal-Mediensystemsteuerung weist außerdem eine zentrale Steuereinheit auf, die über die Steuerungsausgangsschnittstelle und die Steuerungseingangsschnittstelle an die Matrixschaltung angeschlossen ist. Auf der zentralen Steuereinheit ist die Konfiguration für die Steuerung der Matrixschaltung gespeichert. Die Konfiguration beinhaltet insbesondere Art und Anordnung der Ausgabeeinrichtungen sowie der Medienquellen. Auf der zentralen Steuereinheit sind außerdem die Steuerbefehle der an die Matrixschaltung angeschlossenen Ausgabeeinrichtungen und Medienquellen gespeichert.

Die erfindungsgemäße Gerichtssaal-Mediensystemsteuerung weist ebenfalls ein Control-Panel auf, das über die Control-Schnittstelle an die zentrale Steuereinheit angeschlossen ist. Das Control-Panel ist die zentrale Kontroll- bzw. Steuerungskomponente für die Steuerung des erfindungsgemäßen Gerichtssaal-Mediensystems. Es wird von dem Vorsitzenden oder einer dafür bestimmten Person bedient. Das Control-Panel ist im Gerichtssaal selbst angeordnet und wird in einer optionalen Ausgestaltung der Erfindung am Platz des Vorsitzenden angeordnet, kann aber an den Arbeitsplatz einer beauftragten Person weitergeleitet werden. In einer weiteren optionalen Ausgestaltung der Erfindung ist das Control-Panel ausschließlich aus dem Gerichtssaal heraus steuerbar. Dadurch besteht die Möglichkeit das Gerichtssaal-Mediensystem als geschlossenes System zu betreiben, sodass während einer Gerichtsverhandlung kein Zugriff von Extern beispielsweise durch Dritte möglich ist. Der Richter hat somit die volle Kontrolle über alle Geschehnisse des Gerichtssaalmediensystems. In einer optionalen Ausgestaltung der Erfindung sind alle Elemente zur Steuerung des Gerichtssaal-Mediensystems im Gerichtssaal angeordnet. In einer weiteren optionalen Ausführungsform ist die Steuerung des Gerichtssaalmediensystems während einer Gerichtsverhandlung auf im Gerichtssaal befindliche Steuerungselemente, wie beispielsweise das Control-Panel, begrenzt.

Die Eingabevorrichtung, mittels der die Medienquellen gesteuert werden kann, ist üblicherweise ein Bildschirm mit Touch-Funktion. Die Medienquelle kann aber auch über eine Mehrzahl von Eingabevorrichtungen gesteuert werden, z.B. über Maus und Tastatur bzw. eine Spracheingabe.

Die erfindungsgemäße Gerichtssaal-Mediensystemsteuerung weist außerdem eine separate Umschalteinrichtung zur Schaltung der Eingabevorrichtungen auf.

Die erfindungsgemäße Gerichtssaal-Mediensystemsteuerung ermöglicht eine Steuerung derart, dass eine Steuerung der ersten Medienquelle blockiert wird, wenn die auf einer ersten Ausgabeeinrichtung ausgegebenen Medieninhalte verändert werden. Die Schaltung zwischen den Schaltzuständen kann manuell oder automatisch, z.B. mittels einer geeigneten Software, erfolgen.

In einer weiteren Ausführung der Erfindung ist die separate Umschalteinrichtung mit der zentralen Steuereinheit über eine Kommunikationsschnittstelle koppelbar. Insbesondere ist die separate Umschalteinrichtung lösbar mit der zentralen Steuereinheit verbunden.

In einer weiteren Ausbildung der Erfindung ist die Eingabevorrichtung mit der separaten Umschaltvorrichtung über eine Kommunikationsschnittstelle koppelbar. Die Eingabevorrichtung ist üblicherweise ein Bildschirm mit Touch-Funktion. Die Eingabevorrichtung kann außerdem eine Mehrzahl von Eingabevorrichtungen aufweisen, z.B. Maus und Tastatur bzw. eine Spracheingabe.

In einer Weiterbildung der Erfindung ist die separate Umschalteinrichtung mit einer Medienquelle über eine Kommunikationsschnittstelle koppelbar. Die mit der separaten Umschalteinrichtung gekoppelte Medienquelle ist eine erste Medienquelle, deren Steuerung ermöglicht bzw. blockiert werden kann. Daher kann ein Prozessbeteiligter eine Medienquelle bereitstellen und diese steuern, diese Medienquelle kann jedoch über Eingabevorrichtungen weiterer Prozessbeteiligter nicht gesteuert werden.

In einer weiteren Ausgestaltung der Erfindung ist die Medienquelle mit der separaten Umschalteinrichtung über die zentrale Steuereinheit koppelbar. Mittels der zentralen Steuereinheit wird die Medienquelle derart angesteuert, dass sie Bild- und/oder Toninhalte bereitstellt.

In einer weiteren Ausführung der Erfindung ist die separate Umschalteinrichtung durch die zentrale Steuereinheit steuerbar. Die zentrale Steuereinheit steuert die erfindungsgemäße Gerichtssaal-Mediensystemsteuerung. Die zentrale Steuereinheit weist dazu einen Prozessor mit Speicher auf, der ein geeignetes Programm zur Steuerung der Gerichtssaal-Mediensystemsteuerung aufweist.

In einer weiteren Ausgestaltung der Erfindung sind an den Ausgabeschnittstellen unterschiedliche Ausgabeeinrichtungen angeschlossen. Die Matrixschaltung weist eine Mehrzahl von Ausgabeschnittstellen für den separaten Anschluss von Ausgabeeinrichtungen auf, wobei über die Ausgabeschnittstellen die Bild- und/oder Toninhalte ausgebbar sind. Vorzugsweise ist jede Ausgabeeinrichtung mittels jeweils genau eines Anschlusses mit der Matrixschaltung verbunden, wobei ein Anschluss eine oder eine Mehrzahl von Schnittstellen aufweisen kann. Damit ist jede Ausgabeeinrichtung genau identifiziert und von den weiteren an der Matrixschaltung angeschlossenen Ausgabeeinrichtungen abgegrenzt. Zusätzlich kann eine genau definierte Ausgabeeinrichtung zur Ausgabe von Bild- und/oder Toninhalten angewählt werden.

In einer weiteren Ausführung der Erfindung ist an den Quellenschnittstellen mindestens eine steuerbare Medienquelle angeschlossen. Die von der steuerbaren Medienquelle bereitgestellten Bild- und/oder Toninhalte sind bearbeitbar. Insbesondere können die angezeigten Bild- und/oder Toninhalte über die separate Steuereinheit z.B. ausgeschnitten und/oder zugeschnitten werden und/oder die Lautstärke geändert werden.

In einer weiteren Gestaltung der Erfindung ist an die zentrale Steuereinheit ein Control-Panel angeschlossen. Das Control-Panel ist dafür vorgesehen und dafür geeignet, die Ausgabe von Inhalten auf den Ausgabeeinrichtungen zu steuern. Das Control-Panel ist die zentrale Kontroll- bzw. Steuerungskomponente für die Steuerung der erfindungsgemäßen Gerichtssaal-Mediensystemsteuerung. Es wird von dem Vorsitzenden oder einer dafür bestimmten Person bedient. Das Control-Panel wird am Platz des Vorsitzenden angebracht, kann aber an den Arbeitsplatz einer beauftragten Person weitergeleitet werden.

Ausführungsbeispiele der erfindungsgemäßen Gerichtssaal-Mediensystemsteuerung, die dafür vorgesehen und dafür geeignet ist, Inhalte zu empfangen und auf verschiedenen Ausgabeeinrichtungen auszugeben, und des erfindungsgemäßen Verfahrens zur Steuerung eines Gerichtssaal-Mediensystems sind in den Zeichnungen schematisch vereinfacht dargestellt und werden in der nachfolgenden Beschreibung näher erläutert.

Es zeigen:
- Fig. 1:: Eine Ansicht eines Ausführungsbeispiels der erfindungsgemäßen Gerichtssaal-Mediensystemsteuerung, zwei Ausgabeeinrichtungen
- Fig. 2: Eine Ansicht eines weiteren Ausführungsbeispiels der erfindungsgemäßen Gerichtssaal-Mediensystemsteuerung, fünf Ausgabeeinrichtungen
- Fig. 3:: Eine Ansicht eines weiteren Ausführungsbeispiels der erfindungsgemäßen Gerichtssaal-Mediensystemsteuerung, Steuerung der steuerbaren Quelle
- Fig. 4:: Eine Ansicht eines Ausführungsbeispiels der erfindungsgemäßen Gerichtssaal-Mediensystemsteuerung, einsatzbereit angeordnet in einem Gerichtssaal
- Fig. 5:: Eine Ansicht eines Ausführungsbeispiels der erfindungsgemäßen Gerichtssaal-Mediensystemsteuerung, Anordnung der unterschiedlichen Bereiche
- Fig. 6 a:: Eine Ansicht eines Ausführungsbeispiels der erfindungsgemäßen Verfahrens zur Steuerung eines Gerichtssaal-Mediensystemsteuerung, erster Schaltzustand

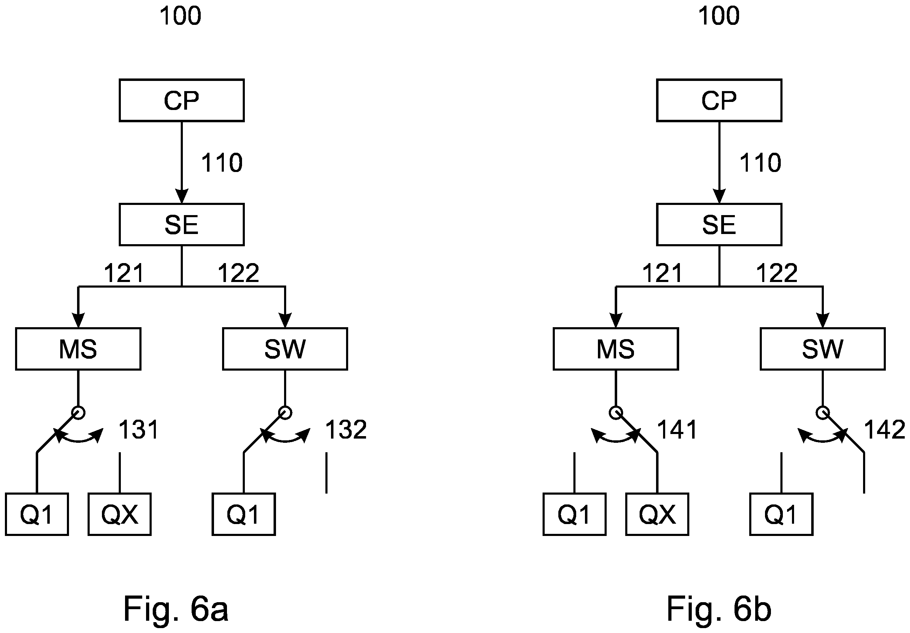

- Fig. 6 b:: Eine Ansicht eines Ausführungsbeispiels der erfindungsgemäßen Verfahrens zur Steuerung eines Gerichtssaal-Mediensystemsteuerung, zweiter Schaltzustand

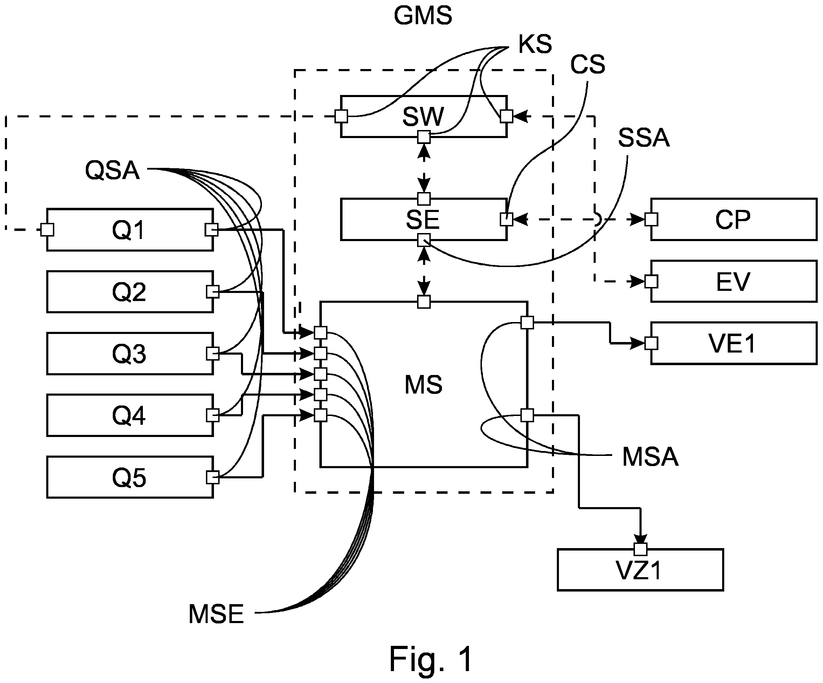

Fig. 1 zeigt eine Ansicht eines Ausführungsbeispiels der erfindungsgemäßen Gerichtssaal-Mediensystemsteuerung GMS. Die erfindungsgemäße Gerichtssaal-Mediensystemsteuerung GMS weist die Matrix-Schaltung MS auf. Die Matrix-Schaltung MS weist eine Mehrzahl von Anschlüssen in Form von Quell-Schnittstellen MSE auf, über die die Matrix-Schaltung MS mit den Medienquellen Q1, Q2, Q3, Q4, Q5 verbunden ist. Jede Quell-Schnittstelle MSE ist mit genau einer Medienquelle Q1, Q2, Q3, Q4, Q5 verbunden. Jede Medienquelle Q1, Q2, Q3, Q4, Q5 weist dazu jeweils eine Schnittstelle QSA auf.

Die Matrix-Schaltung MS weist außerdem zwei Ausgabe-Schnittstellen MSA auf, mit denen jeweils eine Ausgabeeinrichtung VE1, VZ1 verbunden ist. Die erste Ausgabeeinrichtung VE1 ist in diesem Ausführungsbeispiel eine Ausgabeeinrichtung, die den Richtern zur Verfügung steht. Die erste Ausgabeeinrichtung VE1 dient ebenfalls als eine Ausgabeeinrichtung für die Justizmitarbeiter, aber auch als Regiemonitor, auf dem die für die zweite Ausgabeeinrichtung VZ1 bestimmten Bild- und Toninhalte angezeigt werden können. Die zweite Ausgabeeinrichtung VZ1 ist z.B. eine Ausgabeeinrichtung die für die Öffentlichkeit bestimmte Bild- und Toninhalte anzeigt. Die zweite Ausgabeeinrichtung VZ1 kann sich in einem anderen Raum als die erste Ausgabeeinrichtung VE1 befinden. Alle Ausgabeeinrichtungen VE1, VZ1 weisen Komponenten zur Darstellung von Bildinhalten und/oder Toninhalten auf und/oder sind mit solchen verbunden. Jede Ausgabeeinrichtung VE1, VZ1 weist ebenfalls eine Schnittstelle QSA auf.

Über die Steuerungseingangsschnittstelle MSS ist die Matrix-Schaltung MS mit der zentralen Steuereinheit SE verbunden. Die zentrale Steuereinheit SE weist dazu die Steuerungsausgangsschnittstelle SSA auf. Für den Anschluss eines Control-Panels CP weist die zentrale Steuereinheit SE die Control-Schnittstelle CS auf, die mit der Ausgabe-Schnittstelle CPS des Control-Panels CP verbunden ist. Das Control-Panel CP weist eine eigene Anzeige sowie ein Bedienelement auf. Auf der zentralen Steuereinheit SE ist die Konfiguration für die Steuerungslogik gespeichert. Die Anbindung der zu steuernden Ausgabeeinrichtungen VE1, VZ1 und Medienquellen Q1, Q2, Q3, Q4, Q5 kann über Ethernet, RS-232, Infrarot, Relais oder generelle I/O Ports erfolgen. Die Steuerungslogik wird über eine Cloud bereitgestellt und kann in einen Speicher der zentralen Steuereinheit SE geladen werden.

Mit der zentralen Steuereinheit SE ist ebenfalls die separate Umschalteinrichtung SW lösbar verbunden, die mit der zentralen Steuereinheit SE über eine Kommunikationsschnittstelle KS koppelbar ist. Die zentrale Steuereinheit SE weist dazu ebenfalls eine Schnittstelle auf. Die separate Umschalteinrichtung SW ist mit der ersten Medienquelle Q1 mittels einer Kommunikationsschnittstelle KS lösbar verbunden. Die Eingabevorrichtung EV ist mit der separaten Umschalteinrichtung SW lösbar verbunden.

Zur Steuerung der Gerichtssaal-Mediensystemsteuerung GMS stehen zwei Schaltzustände (s. Fig. 6) bereit: Der erste Schaltzustand ermöglicht die Eingabe von Steuerbefehlen für die Steuerung der ersten Medienquelle Q1 mittels der Eingabevorrichtung EV. Der zweite Schaltzustand ermöglicht nicht die Eingabe von Steuerbefehlen für die Steuerung der ersten Medienquelle Q1 mittels der Eingabevorrichtung EV. Zwischen dem ersten und dem zweiten Schaltzustand wird geschaltet, wenn die auf der ersten Ausgabeeinrichtung VE1 ausgegebenen Medieninhalte verändert werden. Optional wird zwischen erstem und zweitem Schaltzustand geschaltet, wenn die für die Ausgabe von Medieninhalten ausgewählte Medienquelle Q1, Q2, Q3, Q4, Q5 geändert wird. Erster und zweiter Schaltzustand sind mittels einer Schaltung realisiert, die auf der separaten Umschalteinrichtung SW angeordnet ist. Die separate Umschalteinrichtung SW verfügt dazu optional über ein geeignetes Software-Programm mit Speicher und Prozessor.

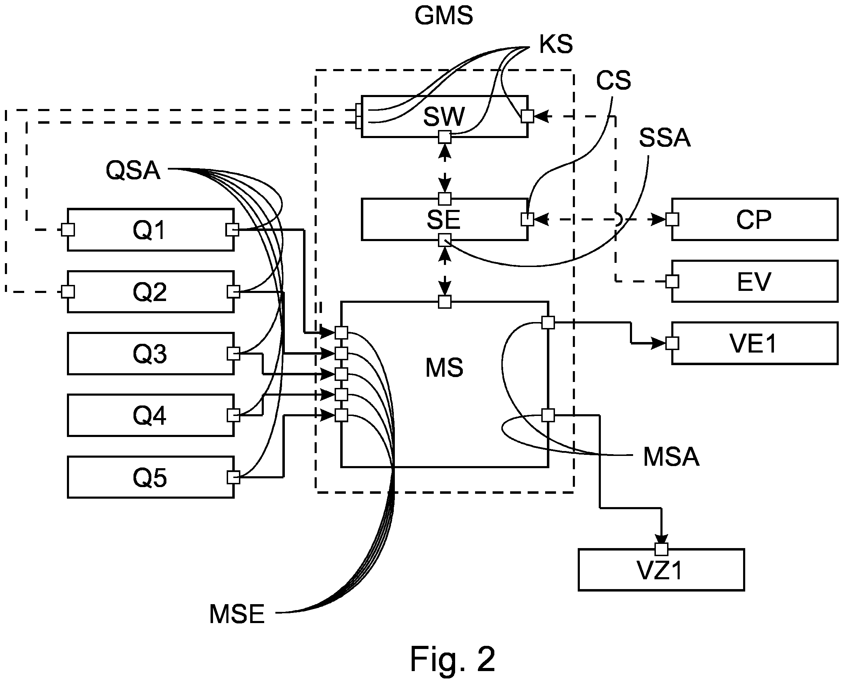

Ein weiteres Ausführungsbeispiel der erfindungsgemäßen Gerichtssaal-Mediensystemsteuerung GMS zeigt Fig. 2. Die erfindungsgemäße Gerichtssaal-Mediensystemsteuerung GMS weist ebenfalls die Matrix-Schaltung MS auf. Mit der Matrix-Schaltung MS sind fünf Medienquellen Q1, Q2, Q3, Q4, Q5 über jeweils eine Eingabe-Schnittstelle MSE verbunden. Jede Medienquelle Q1, Q2, Q3, Q4, Q5 weist dazu eine Ausgabe-Schnittstelle QSA auf. Die Matrix-Schaltung MS weist außerdem fünf Ausgabe-Schnittstellen MSA auf, mit denen jeweils eine Ausgabeeinrichtung VE1, VE2, VE3, VZ1, VZ2 verbunden ist. Eine erste Ausgabeeinrichtung VE1 ist eine Ausgabeeinrichtung, die für den Vorsitzenden Richter zur Verfügung steht. Die beiden weiteren ersten Ausgabeeinrichtungen VE2, VE3 sind dafür eingerichtet, Bild- und/oder Toninhalte den Prozessbeteiligten auszugeben. Die zweiten Ausgabeeinrichtungen VZ1, VZ2 sind Ausgabeeinrichtungen, die für die Öffentlichkeit bestimmte Bild- und Toninhalte anzeigen. Jede Ausgabeeinrichtung VE1, VE2, VE3, VZ1, VZ2 weist ebenfalls eine Schnittstelle auf. Über das Bedienelement des Control-Panels CP werden sowohl eine der Medienquellen Q1, Q2, Q3, Q4, Q5, Q6 zum Empfang der Bild- und/oder Toninhalte als auch die die empfangenen Bild- und/oder Toninhalte ausgebenden Ausgabeeinrichtungen VE1, VE2, VE3, VZ1, VZ2 ausgewählt.

Mit der zentralen Steuereinheit SE ist ebenfalls die separate Umschalteinrichtung SW verbunden, die mit der zentralen Steuereinheit SE über eine Kommunikationsschnittstelle KS koppelbar ist. Die zentrale Steuereinheit SE weist dazu ebenfalls eine Schnittstelle auf. Die separate Umschalteinrichtung SW ist mit einer ersten Medienquelle Q1, Q2 mittels jeweils einer Kommunikationsschnittstelle KS lösbar verbunden. Die Eingabevorrichtung EV ist mit der separaten Umschalteinrichtung SW lösbar verbunden.

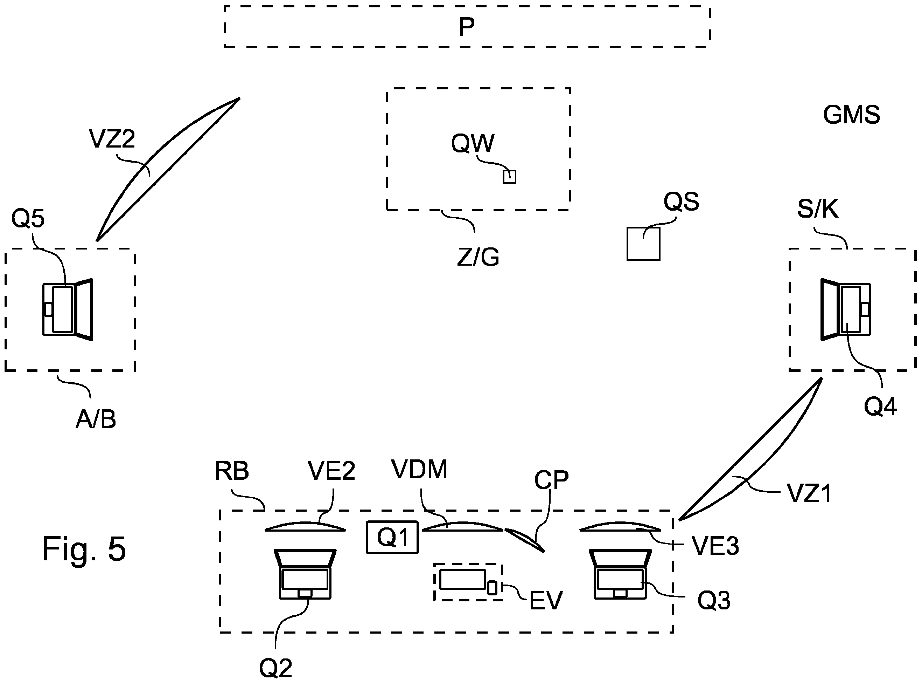

Die Medienquellen Q1, Q2, Q3, Q4, Q5 sind in diesem Ausführungsbeispiel in zwei Gruppen eingeteilt: Die erste Gruppe wird von den beiden ersten Medienquellen Q1, Q2 gebildet. Die erste Medienquelle Q1 steht dem Vorsitzenden Richter zur Verfügung, die erste Medienquelle Q2 einem weiteren Mitglied der Richterbank RB (s. Fig. 5), z.B. einem Beisitzer. Die zweite Gruppe wird von den drei zweiten Medienquellen Q3, Q4, Q5 gebildet. Zwischen erstem und zweitem Schaltzustand wird geschaltet, wenn die auf der ersten Ausgabeeinrichtung VE1 ausgegebenen Medieninhalte verändert werden. Außerdem wird zwischen erstem und zweitem Schaltzustand geschaltet, wenn die für die Ausgabe von Medieninhalten ausgewählte Medienquelle Q1, Q2, Q3, Q4, Q5 geändert wird. In diesem Ausführungsbeispiel erfolgt ein Schalten zwischen erstem und zweitem Schaltzustand, wenn die für die Ausgabe von Medieninhalten Gruppe von Medienquellen Q1, Q2, Q3, Q4, Q5 gewechselt wird. Ein Wechsel der Schaltzustände erfolgt also dann, wenn von einer der Medienquellen Q1, Q2 der ersten Gruppe von Medienquellen Q1, Q2, Q3, Q4, Q5 zu einer der Medienquellen Q3, Q4, Q5 der zweiten Gruppe gewechselt wird, und umgekehrt.

Bei einem Wechsel der Medienquellen innerhalb der beiden Gruppen erfolgt kein Wechsel der Schaltzustände. Insbesondere erfolgt kein Wechsel der Schaltzustände, wenn von einer der Medienquellen Q1, Q2 der ersten Gruppe von Medienquellen Q1, Q2, Q3, Q4, Q5 zur anderen Medienquelle Q1, Q2 der ersten Gruppe von Medienquellen Q1, Q2, Q3, Q4, Q5 gewechselt wird. Ebenfalls erfolgt kein Wechsel der Schaltzustände, wenn von einer der Medienquellen Q3, Q4, Q5 der zweiten Gruppe von Medienquellen Q1, Q2, Q3, Q4, Q5 zu einer anderen Medienquelle Q3, Q4, Q5 der zweiten Gruppe von Medienquellen Q1, Q2, Q3, Q4, Q5 gewechselt wird.

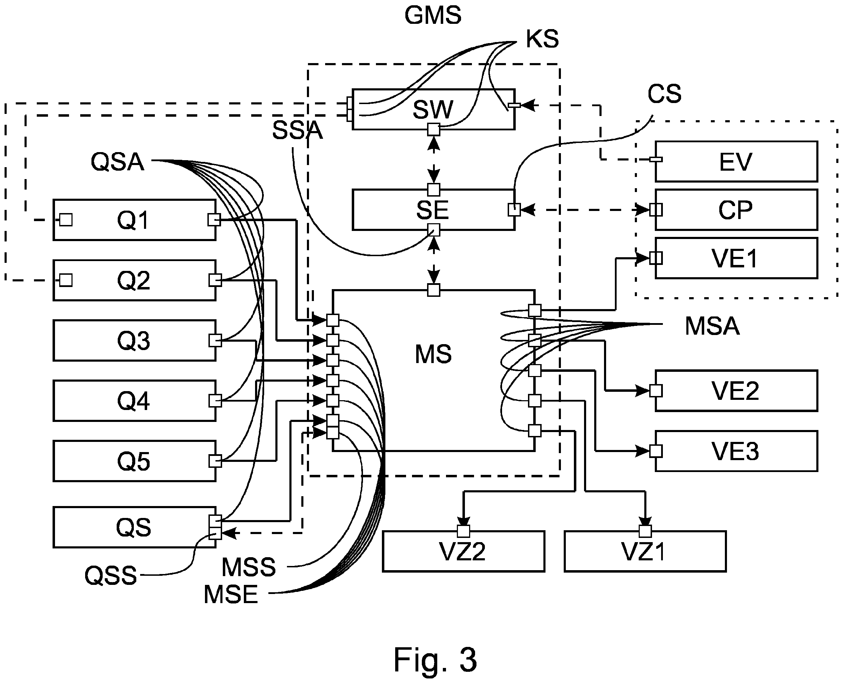

Fig. 3 zeigt eine Variante des vorherigen Ausführungsbeispiels (s. Fig. 2) der erfindungsgemäßen Gerichtssaal-Mediensystemsteuerung GMS, wobei eine der Medienquellen Q1, Q2, Q3, Q4, Q5, QS eine steuerbare Quelle QS ist. Die steuerbare Quelle QS ist mit der Matrix-Schaltung MS über die Ausgabe-Schnittstelle QSA mit der Eingabe-Schnittstelle MSE verbunden. Zusätzlich ist die Eingabe-Schnittstelle QSS der steuerbaren Quelle QS mit der Ausgabe-Schnittstelle MSS der Matrix-Schaltung MS verbunden.

Über das Bedienelement des Control-Panels CP kann der Bediener des Control-Panels CP die von der steuerbaren Quelle QS empfangenen Bild- und/oder Toninhalte bearbeiten. Insbesondere können die angezeigten Bild- und/oder Toninhalte über die zentrale Steuereinheit SE z.B. ausgeschnitten und/oder zugeschnitten werden und/oder die Lautstärke geändert werden.

Mit der zentralen Steuereinheit SE ist ebenfalls die separate Umschalteinrichtung SW verbunden, die mit der zentralen Steuereinheit SE über eine Kommunikationsschnittstelle KS koppelbar ist. Die zentrale Steuereinheit SE weist dazu ebenfalls eine Schnittstelle auf. Die separate Umschalteinrichtung SW ist mit einer ersten Medienquelle Q1, Q2 mittels jeweils einer Kommunikationsschnittstelle KS lösbar verbunden. Die Eingabevorrichtung EV ist mit der separaten Umschalteinrichtung SW lösbar verbunden.

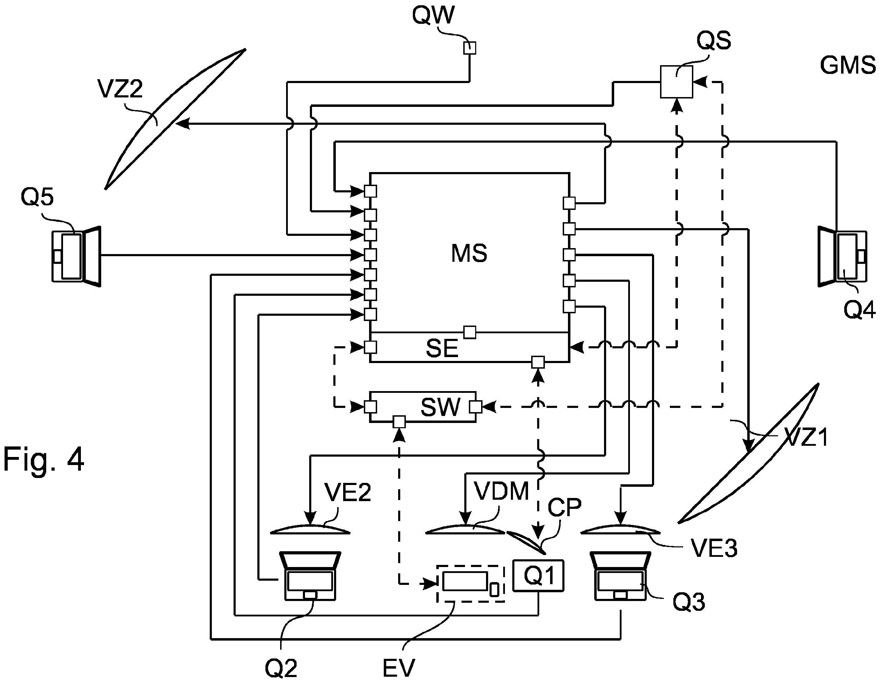

Fig. 4 und Fig. 5 zeigen eine beispielhafte Anordnung eines Ausführungsbeispiels der erfindungsgemäßen Gerichtssaal-Mediensystemsteuerung GMS in einem Gerichtssaal. Der Gerichtssaal weist einen öffentlich zugänglichen Bereich für Zuschauer P, eine Richterbank RB mit jeweils einem Platz für den Vorsitzenden Richter und zwei Beisitzern, einen Bereich Z/G für Zeugen bzw. Gutachter, sowie jeweils einen Bereich für die Prozessparteien, Klage S/K und Verteidigung A/B, auf.

Die Gerichtssaal-Mediensystemsteuerung GMS weist als zentrales Element die Matrix-Schaltung MS auf, mit der sämtliche Medienquellen Q1, Q2, Q3, Q4, Q5, QW, QS über Quell-Schnittstellen QSA verbunden sind. Die Medienquellen Q1, Q2, Q3, Q4, Q5, QW, QS sind in diesem Ausführungsbeispiel mobile Endgeräte (Laptops) des Vorsitzenden Richters Q1, der beiden Beisitzer Q2, Q3, sowie jeweils ein mobiles Endgerät Q4, Q5 der beiden Prozessparteien. Zusätzlich wird über einen freien Anschluss die Möglichkeit bereitgestellt, dass ein Zeuge und/oder ein Gutachter eine Quelle QW anschließen kann. Außerdem ist mit der Matrix-Schaltung MS eine Dokumentenkamera QS verbunden, die eine steuerbare Quelle QS darstellt.

Mit der Matrix-Schaltung MS sind weiterhin die Ausgabeeinrichtungen VDM, VE2, VE3, VZ1, VZ2 über Ausgabe-Schnittstellen MSA angeschlossen. Die Ausgabeeinrichtung VDM ist dabei die Master-Ausgabeeinrichtung und gibt Bild- und/oder Toninhalte dem Vorsitzenden Richter aus. Die ersten Ausgabeeinrichtungen VE2, VE3 sind dafür eingerichtet, Bild- und/oder Toninhalte den Beisitzern auszugeben.

Die zweiten Ausgabeeinrichtungen VZ1, VZ2 sind öffentlich zugängliche Ausgabeeinrichtungen, in diesem Ausführungsbeispiel Großbildschirme oder -leinwände. Die Matrix-Schaltung MS ist in diesem Ausführungsbeispiel in dem Gerichtssaal selbst angeordnet, möglich ist aber auch eine Anordnung der Matrix-Schaltung MS in einem entfernt gelegenen Ort, z.B. dem IT- und Server-Raum des Gerichtsgebäudes. Mit der zentralen Steuereinheit SE ist ebenfalls die Konfigurationssteuereinheit KSE lösbar verbunden, die separat angeordnet ist.

Die Steuerung der Gerichtssaal-Mediensystemsteuerung GMS erfolgt über ein Control-Panel CP. Der Vorsitzende Richter kann mittels des Control-Panels CP die gesamte Technik der Gerichtssaal- Mediensystemsteuerung GMS im Sitzungssaal steuern. Hierfür ist das Control-Panel ist im Gerichtssaal selbst angeordnet und wird am Platz des Vorsitzenden angeordnet. Es ist aber auch möglich, diese Steuerung über das Control-Panel CP an eine andere Person zu übertragen, so dass der Vorsitzende damit nicht zusätzlich belastet wird.

Das Gerichtssaal-Mediensystem kann so optional als geschlossenes System betrieben werden, sodass während einer Gerichtsverhandlung kein Zugriff von Extern beispielsweise durch Dritte möglich ist. Der Richter hat somit die volle Kontrolle über alle Geschehnisse des Gerichtssaalmediensystems. In einer optionalen Ausgestaltung der Erfindung sind alle Elemente zur Steuerung des Gerichtssaal-Mediensystems im Gerichtssaal angeordnet. In einer weiteren optionalen Ausführungsform ist die Steuerung des Gerichtssaalmediensystems während einer Gerichtsverhandlung auf im Gerichtssaal befindliche Steuerungselemente, wie beispielsweise das Control-Panel, begrenzt.

Mit der zentralen Steuereinheit SE ist ebenfalls die separate Umschalteinrichtung SW lösbar verbunden, die mit der zentralen Steuereinheit SE über eine Kommunikationsschnittstelle KS koppelbar ist. Die zentrale Steuereinheit SE weist dazu ebenfalls eine Schnittstelle auf. Die separate Umschalteinrichtung SW ist mit der ersten Medienquelle Q1 mittels einer Kommunikationsschnittstelle KS lösbar verbunden. Die Eingabevorrichtung EV ist mit der separaten Umschalteinrichtung SW lösbar verbunden.

Mit der zentralen Steuereinheit SE ist ebenfalls die separate Umschalteinrichtung SW verbunden, die mit der zentralen Steuereinheit SE über eine Kommunikationsschnittstelle KS koppelbar ist. Die zentrale Steuereinheit SE weist dazu ebenfalls eine Schnittstelle auf. Die separate Umschalteinrichtung SW ist mit einer ersten Medienquelle Q1, Q2 mittels jeweils einer Kommunikationsschnittstelle KS lösbar verbunden. Die Eingabevorrichtung EV ist mit der separaten Umschalteinrichtung SW lösbar verbunden.

Der Bediener des Control-Panels CP wählt mittels des Bedienelements des Control-Panels CP eine der Medienquellen Q1, Q2, Q3, Q4, Q5, QW, QS zum Empfang der Bild- und/oder Toninhalte. Diese Auswahl wird von dem Control-Panel CP an die zentrale Steuereinheit SE gesendet. Die empfangenen Bild- und/oder Toninhalte werden dabei nicht auf der Anzeige des Control-Panels CP selbst angezeigt, sondern zunächst auf der Master-Ausgabeeinrichtung VDM, die eine Vorschaufunktion ausübt. Hier kann der Vorsitzende Richter die empfangenen Bild- und/oder Toninhalte prüfen. Zusätzlich kann der Vorsitzende Richter mittels der Master-Ausgabeeinrichtung VDM die ausgewählten und auf der Master-Ausgabeeinrichtung VDM angezeigten Bild- und/oder Toninhalte verändern und bearbeiten, z.B. ausschneiden, zuschneiden oder die Lautstärke ändern. Außerdem kann der Vorsitzende Richter die von der steuerbaren Quelle QS empfangenen Bild- und/oder Toninhalte ebenfalls in gleicher Weise mittels des Control-Panels CP bearbeiten. Im Anschluss wählt der Vorsitzende Richter oder der Bediener des Control-Panels CP mittels des Control-Panels CP eine oder eine Mehrzahl der Ausgabeeinrichtungen VDM, VE2, VE3, VE4, VZ1, VZ2 zur Ausgabe der von der ausgewählten Medienquelle Q1, Q2, Q3, Q4, Q5, QW, QS empfangenen Bild- und/oder Toninhalte aus. Die empfangenen Bild- und/oder Toninhalte werden dann auf der oder den ausgewählten Ausgabeeinrichtungen VDM, VE2, VE3, VE4, VZ1, VZ2 angezeigt.

Eine weitere Quelle ist eine Videokonferenz, die ebenfalls mittels des Control-Panels CP ausgewählt werden kann. Die erfindungsgemäße Gerichtssaal-Mediensystemsteuerung GMS ist in der Lage, die Mimik und Gestik des gesamten Spruchkörpers und der anwesenden Prozessbeteiligten dauerhaft und in hochauflösender Qualität zu übertragen. Beiträge von Prozessbeteiligten, die körperlich nicht im Sitzungssaal anwesend sind, werden auf diese Weise über die vorhandenen Ausgabeeinrichtungen VDM, VE2, VE3, VE4, VZ1, VZ2 allen Anwesenden zugänglich gemacht.

Ein Ausführungsbeispiel des erfindungsgemäßen Verfahrens 100 zur Steuerung einer Gerichtssaal-Mediensystemsteuerung GMS zeigt Fig. 6. In diesem Ausführungsbeispiel wird die Steuerung der Gerichtssaal-Mediensystemsteuerung GMS des ersten Ausführungsbeispiels (s. Fig. 1) dargestellt. Das Verfahren 100 beginnt mit der Eingabe eines Befehls zur Auswahl einer der Medienquellen Q1, Q2, Q3, Q4, Q5 zum Empfang der Bild- und/oder Toninhalte am Bedienelement des Control-Panels CP durch einen Bediener. Diese Auswahl wird von dem Control-Panel CP an die zentrale Steuereinheit SE gesendet 110. Die Steuereinheit SE sendet 121 einen Befehl zur Ansteuerung der ausgewählten Medienquelle Q1, Q2, Q3, Q4, Q5 an die Matrix-Schaltung MS sowie eine Information 122 über die ausgewählte Medienquelle Q1, Q2, Q3, Q4, Q5 an die separate Umschalteinrichtung SW.

Abhängig von der ausgewählten Medienquelle Q1, Q2, Q3, Q4 oder Q5 erfolgt danach eine Schaltung der zwei möglichen Schaltzustände: Im Falle der Auswahl 131 der Medienquelle Q1 (Fig. 6 a) wird die Gerichtssaal-Mediensystemsteuerung GMS im ersten Schaltzustand geschaltet. Die Medienquelle Q1 steht in diesem Ausführungsbeispiel dem Vorsitzenden Richter zur Verfügung. Die Medienquelle Q1 sendet Bild- und/oder Toninhalte, die über die vorhandenen Ausgabeeinrichtungen VE1, VZ1 ausgegeben werden. Gleichzeitig schaltet 132 die separate Umschalteinrichtung SW den ersten Schaltzustand derart, dass eine Eingabe von Steuerbefehlen für die Steuerung der Medienquelle Q1 über eine Eingabevorrichtung EV ermöglicht ist.

Im Falle der Auswahl 141 einer der weiteren Medienquelle Q2, Q3, Q4, Q5 (Fig. 6 b) wird die Gerichtssaal-Mediensystemsteuerung GMS im zweiten Schaltzustand geschaltet. Die ausgewählte Medienquelle Q2, Q3, Q4 oder Q5 sendet Bild- und/oder Toninhalte, die über die vorhandenen Ausgabeeinrichtungen VE1, VZ1 ausgegeben werden. Gleichzeitig schaltet 142 die separate Umschalteinrichtung SW den zweiten Schaltzustand derart, dass eine Eingabe von Steuerbefehlen für die Steuerung der Medienquelle Q1 über eine Eingabevorrichtung EV nicht ermöglicht ist. Die von der ersten Medienquelle Q1 bereitgestellten Medieninhalte werden dabei nicht von den Ausgabeeinrichtungen VE1, VZ1 ausgegeben.

Die Eingabevorrichtung EV, mittels der die Medienquelle Q1 gesteuert werden kann, ist üblicherweise ein Bildschirm mit Touch-Funktion. Die Medienquelle Q1 kann aber auch über eine Mehrzahl von Eingabevorrichtungen EV gesteuert werden, insbesondere über Maus und Tastatur. Ebenfalls kann das Schalten zwischen den beiden Schaltzuständen nur ausgewählte Eingabevorrichtungen EV betreffen. So kann z.B. die Maus zur Bedienung der Medienquelle Q1 aktiviert bleiben, während die Eingabe über die Tastatur blockiert ist, oder umgekehrt.

### BEZUGSZEICHENLISTE

- GMS: Gerichtssaal-Mediensystemsteuerung
- VE1, VE2, VE3, VE4, VE5: Erste Ausgabeeinrichtung
- VDM: Master-Ausgabeeinrichtung
- VZ1, VZ2: Zweite Ausgabeeinrichtung
- MSA: Ausgabe-Schnittstelle der Matrixschaltung
- MS: Matrix-Schaltung
- MSE: Eingabe-Schnittstelle der Matrixschaltung
- MSS: Steuerungseingangsschnittstelle
- SE: Zentrale Steuereinheit
- SSA: Steuerungsausgangsschnittstelle
- CS: Control-Schnittstelle
- CPS: Ausgabe-Schnittstelle Control-Panel
- CP: Control-Panel
- Q1, Q2, Q3, Q4, Q5, Q6: Medienquelle
- QS: Steuerbare Quelle
- QW: Freie Quelle
- QSA: Quell-Schnittstelle
- SW: Separate Umschalteinrichtung
- EV: Eingabevorrichtung
- RB: Richterbank
- P: Zuschauerbereich
- Z/G: Bereich für Zeugen und Gutachter
- S/K: Bereich für Staatsanwalt/Klage
- A/B: Bereich für Verteidigung
- 100: Verfahren zur Steuerung eines Gerichtssaal-Mediensystems
- 110: Senden Auswahl der Medienquelle
- 121: Senden Auswahl der Medienquelle an Matrix-Schaltung
- 122: Senden Auswahl der Medienquelle an separate Umschalteinrichtung
- 131: Schalten der Matrix-Schaltung in den ersten Schaltzustand
- 132: Schalten der separaten Umschalteinrichtung in den ersten Schaltzustand
- 141: Schalten der Matrix-Schaltung in den zweiten Schaltzustand
- 142: Schalten der separaten Umschalteinrichtung in den zweiten Schaltzustand

## Patentansprüche

1. Verfahren zur Steuerung eines Gerichtssaal-Mediensystems (GMS) mit den Verfahrensschritten
• Bereitstellen eines ersten Schaltzustandes mit einer Schaltung, die die Eingabe von Steuerbefehlen für die Steuerung einer ersten Medienquelle (Q1, Q2) über eine Eingabevorrichtung (EV) ermöglicht
• Bereitstellen eines zweiten Schaltzustandes mit einer Schaltung, die die Eingabe von Steuerbefehlen für die Steuerung der ersten Medienquelle (Q1, Q2) über eine Eingabevorrichtung (EV) nicht ermöglicht
wobei zwischen dem ersten und dem zweiten Schaltzustand geschaltet wird, wenn die auf einer ersten Ausgabeeinrichtung (VDM, VE1, VE2, VE3, VE4, VE5) ausgegebenen Medieninhalte verändert werden.

2. Verfahren zur Steuerung eines Gerichtssaal-Mediensystems (GMS) nach Anspruch 1
**dadurch gekennzeichnet, dass**
zwischen dem ersten und dem zweiten Schaltzustand geschaltet wird, wenn die für die Ausgabe von Medieninhalten auf der ersten Ausgabeeinrichtung (VDM, VE1, VE2, VE3, VE4, VE5) ausgewählte Medienquelle (Q1, Q2, Q3, Q4, Q5, Q6, QS, QW) geändert wird.

3. Verfahren zur Steuerung eines Gerichtssaal-Mediensystems (GMS) nach Anspruch 1 oder 2
**dadurch gekennzeichnet, dass**
bei dem ersten Schaltzustand die Medieninhalte der von einer ersten Medienquelle (Q1, Q2) zur Ausgabe bereitgestellten Medieninhalte auf der ersten Ausgabeeinrichtung (VDM, VE1, VE2, VE3, VE4, VE5) ausgegeben werden.

4. Verfahren zur Steuerung eines Gerichtssaal-Mediensystems (GMS) nach einem oder mehreren der vorhergehenden Ansprüche
**dadurch gekennzeichnet, dass**
bei dem zweiten Schaltzustand die Medieninhalte der von einer von der ersten Medienquelle (Q1, Q2) verschiedenen Medienquelle (Q3, Q4, Q5, Q6, QS, QW) zur Ausgabe bereitgestellten Medieninhalte auf der ersten Ausgabeeinrichtung (VDM, VE1, VE2, VE3, VE4, VE5) ausgegeben werden.

5. Verfahren zur Steuerung eines Gerichtssaal-Mediensystems (GMS) nach einem oder mehreren der vorhergehenden Ansprüche
**dadurch gekennzeichnet, dass**
die auf der ersten Ausgabeeinrichtung (VDM, VE1, VE2, VE3, VE4, VE5) zur Ausgabe gebrachten veränderten Medieninhalte aus einer von der ersten Medienquelle (Q1, Q2) verschiedenen Medienquelle (Q3, Q4, Q5, Q6, QS, QW) zur Ausgabe auf der ersten Ausgabeeinrichtung (VDM, VE1, VE2, VE3, VE4, VE5) gebracht werden.

6. Verfahren zur Steuerung eines Gerichtssaal-Mediensystems (GMS) nach einem oder mehreren der vorhergehenden Ansprüche
**dadurch gekennzeichnet, dass**
das Verändern der auf der ersten Ausgabeeinrichtung (VDM, VE1, VE2, VE3, VE4, VE5) zur Ausgabe gebrachten Medieninhalte durch die Auswahl einer von der ersten Medienquelle (Q1, Q2) verschiedenen Medienquelle (Q3, Q4, Q5, Q6, QS, QW) für die Ausgabe von Medieninhalten auf der ersten Ausgabeeinrichtung (VDM, VE1, VE2, VE3, VE4, VE5) erfolgt.

7. Verfahren zur Steuerung eines Gerichtssaal-Mediensystems (GMS) nach einem oder mehreren der vorhergehenden Ansprüche
**dadurch gekennzeichnet, dass**
die Steuerung der Eingabeeinrichtungen (EV) über eine separate Umschaltvorrichtung (SW) erfolgt,
wobei
die separate Umschaltvorrichtung (SW) mit einer Steuereinheit (SE) gekoppelt ist, und
wobei die Steuereinheit (SE) über ein separates Control-Panel (CP) gesteuert wird.

8. Verfahren zur Steuerung eines Gerichtssaal-Mediensystems (GMS) nach einem oder mehreren der vorhergehenden Ansprüche
**dadurch gekennzeichnet, dass**
beim Schalten zwischen dem ersten Schaltzustand und dem zweiten Schaltzustand ein Aktivieren oder Deaktivieren einer Eingabeeinrichtung (EV) zur Steuerung der ersten Medienquelle (Q1, Q2) erfolgt.

9. Verfahren zur Steuerung eines Gerichtssaal-Mediensystems (GMS) nach einem oder mehreren der vorhergehenden Ansprüche
**dadurch gekennzeichnet, dass**
das Schalten abhängig von der ausgewählten Medienquelle (Q1, Q2, Q3, Q4, Q5, Q6, QS, QW) ist,
wobei die Medienquellen (Q1, Q2, Q3, Q4, Q5, Q6, QS, QW) in zwei Gruppen eingeteilt sind,
wobei bei einem Wechsel von der ersten Gruppe von Medienquellen (Q1, Q2) zur zweiten Gruppe von Medienquellen (Q3, Q4, Q5, Q6, QS, QW) ein Schalten zwischen den Schaltzuständen erfolgt, und
wobei bei einem Wechsel von Medienquellen (Q1, Q2, Q3, Q4, Q5, Q6, QS, QW) innerhalb einer Gruppe kein Schalten zwischen den Schaltzuständen erfolgt.

10. Verfahren zur Steuerung eines Gerichtssaal-Mediensystems (GMS) nach einem oder mehreren der vorhergehenden Ansprüche
**dadurch gekennzeichnet, dass**
die erste Medienquelle (Q1, Q2) über mehrere Eingabevorrichtungen (EV) gesteuert wird
wobei das Schalten zwischen den Schaltzuständen nur ausgewählte Eingabevorrichtungen (EV) betrifft, und
wobei das Schalten zwischen den Schaltzuständen nur eine zentrale Eingabevorrichtung (EV) betrifft.

11. Gerichtssaal-Mediensystemsteuerung (GMS) dafür vorgesehen und dafür geeignet, Inhalte zu empfangen und auf unterschiedlichen Ausgabeeinrichtungen (VDM, VE1, VE2, VE3, VE4, VE5, VZ1, VZ2) auszugeben, umfassend
• eine Matrixschaltung (MS)
mit ein oder mehreren Quellenschnittstellen (MSE)
mit ein oder mehreren Ausgabeschnittstellen (MSA)
• eine zentrale Steuereinheit (SE) zur Steuerung der Gerichtssaal-Mediensystemsteuerung (GMS)
• ein Control-Panel (CP) zur Eingabe von Steuerungsbefehlen
• eine Eingabevorrichtung (EV) zur Steuerung von an die Matrixschaltung (MS) angeschlossenen Medienquellen (Q1, Q2, Q3, Q4, Q5, Q6, QS, QW) und
• eine separate Umschalteinrichtung (SW) zur Schaltung der Eingabevorrichtungen (EV)

12. Gerichtssaal-Mediensystemsteuerung (GMS) nach Anspruch 11,
**dadurch gekennzeichnet, dass**
die separate Umschalteinrichtung (SW) mit der zentralen Steuereinheit (SE) über eine Kommunikationsschnittstelle (KS) koppelbar ist.

13. Gerichtssaal-Mediensystemsteuerung (GMS) nach Anspruch 11 oder 12
**dadurch gekennzeichnet, dass**
die Eingabevorrichtung (EV) mit der separaten Umschaltvorrichtung (SW) über eine Kommunikationsschnittstelle (KS) koppelbar ist.

14. Gerichtssaal-Mediensystemsteuerung (GMS) nach einem oder mehreren der Ansprüche 11 bis 13
**dadurch gekennzeichnet, dass**
die separate Umschalteinrichtung (SW) mit einer Medienquelle (Q1, Q2, Q3, Q4, Q5, Q6, QS, QW) über eine Kommunikationsschnittstelle (KS) koppelbar ist, wobei die Medienquelle (Q1, Q2, Q3, Q4, Q5, Q6, QS, QW) mit der separaten Umschalteinrichtung (SW) über die zentrale Steuereinheit (SE) koppelbar ist.

15. Gerichtssaal-Mediensystemsteuerung (GMS) nach einem oder mehreren der Ansprüche 11 bis 14
**dadurch gekennzeichnet, dass**
die separate Umschalteinrichtung (SW) durch die zentrale Steuereinheit (SE) steuerbar ist.
